# DEMANDE DE BREVET EUROPEEN

(11) **EP 4 841 084 A1**
(43) Date de publication de la demande: **18.11.2026**
(21) Numéro de dépôt: 26159460.0
(22) Date de dépôt: 19.02.2026
(51) Int. Cl.: F02C 7/08, F02C 7/20

(54) **ENSEMBLE MUNI D'UNE BANDE DE RECOUVREMENT MULTICOUCHE POUR LIER UNE TUYÈRE D'ÉCHAPPEMENT A UN ÉCHANGEUR THERMIQUE**

(30) Priorité: 15.05.2025 FR 2505177
(71) Demandeur: Airbus Helicopters, 13725 Marignane Cedex (FR)
(72) Inventeur: HONNORAT, Olivier, 13090 AIX EN PROVENCE (FR); RANAIVOSON, Jonathan, 13002 MARSEILLE (FR); DUBOURG, Christophe, 13100 LE THOLONET (FR)
(74) Mandataire: GPI Brevets

(57) **Abrégé**

La présente invention concerne un ensemble d'échange thermique (10) comprenant une tuyère d'échappement (20) alimentant en gaz chauds un échangeur thermique (40), la tuyère d'échappement (20) s'étendant jusqu'à un tronçon extrémal de sortie (21), l'échangeur thermique (40) comprenant un tronçon extrémal d'entrée (45). Le tronçon extrémal de sortie (21) rentre dans le tronçon extrémal d'entrée (45) afin de former une chicane (35) au regard des gaz chauds; ledit ensemble d'échange thermique (10) comportant une bande de recouvrement multicouche (50) solidarisée à une première cornière (46) liée à la tuyère d'échappement (20), la bande de recouvrement multicouche (50) étant solidarisée à une deuxième cornière (47) liée à l'échangeur thermique (40), la bande de recouvrement multicouche (50) entourant le tronçon extrémal d'entrée (45) et le tronçon extrémal de sortie (21).

## Description

La présente invention concerne un ensemble muni d'une bande de recouvrement multicouche pour lier une tuyère d'échappement à un échangeur thermique. La présente invention se trouve dans le domaine des échangeurs thermiques, et en particulier des échangeurs thermiques destinés au réchauffement de l'air comprimé utilisé comme comburant dans une chambre de combustion d'une turbine à gaz équipant un aéronef.

L'invention concerne également une installation motrice munie d'une turbine à gaz et de cet ensemble. L'invention se rapporte également à un aéronef, tel un giravion motorisé par une ou plusieurs de ces turbines à gaz.

Une turbine à gaz comporte un générateur de gaz alimenté en air frais. Ce générateur de gaz est muni d'un compresseur ayant un ou plusieurs étages de compression, par exemple de type compresseur centrifuge, pour comprimer l'air provenant de l'extérieur. L'air comprimé est ensuite dirigé dans une chambre de combustion du générateur de gaz. Des gaz d'échappement s'échappent alors de la chambre de combustion pour mettre en mouvement au moins une turbine haute pression du générateur de gaz solidaire en rotation du ou des compresseurs. En outre, les gaz d'échappement peuvent ensuite mettre en mouvement au moins une turbine libre basse pression solidaire en rotation d'un arbre de puissance. Les gaz d'échappement sont ensuite dirigés vers un milieu extérieur à l'aéronef par une tuyère d'échappement.

Le rendement d'une turbine à gaz peut être amélioré en réchauffant l'air comprimé par le compresseur avant son admission dans la chambre de combustion.

A cet effet, l'installation motrice peut comprendre un échangeur thermique pour réchauffer l'air comprimé par le compresseur à l'aide des gaz d'échappement.

A cet effet, un échangeur thermique connu comporte une unité d'échange thermique à plaques disposée dans un carter. L'unité d'échange thermique comporte un empilement de modules, chaque module comprenant deux plaques. Le carter est connecté mécaniquement à la tuyère d'échappement et à une tuyère de sortie. Dès lors, l'unité d'échange thermique est en communication fluidique d'une part avec le compresseur et d'autre part avec la chambre de combustion. Par suite, l'air comprimé sortant du compresseur circule dans l'unité d'échange thermique en passant au sein de chaque module, entre les deux plaques de chaque module, puis sort de l'unité d'échange thermique pour rejoindre la chambre de combustion. A l'inverse, les gaz d'échappement provenant de la tuyère d'échappement pénètrent dans l'échangeur thermique, puis rejoignent la tuyère de sortie en passant notamment entre les modules pour réchauffer l'air comprimé.

Les documents FR 2988822 et FR 3024225 décrivent par exemple un échangeur thermique comportant une pluralité de plaques associées par paire. Chaque plaque comporte une multitude d'ondulations parallèles et deux cheminées qui, une fois regroupées, forment des conduites d'entrée et de sortie de l'échangeur. Les plaques de ces échangeurs sont de faibles épaisseurs et réalisées en Inconel^{®}.

Au sein d'un aéronef, un tel échangeur thermique est soumis à des contraintes thermiques et mécaniques très importantes.

En effet, les gaz d'échappement sortant d'un turbomoteur sont extrêmement chauds, de l'ordre de 700°C (degrés Celsius). De fait, les éléments constituant l'échangeur thermique doivent être capables de résister à de telles températures. De plus, au démarrage du moteur, une variation de température très importante et rapide, avec un passage d'une température ambiante, par exemple de l'ordre de 15°C, à 700°C en une dizaine de secondes se produit au sein de l'échangeur thermique. Cette soudaine augmentation de la température, due à la séquence de démarrage moteur, induit alors des contraintes thermiques et mécaniques très importantes susceptibles de générer des déformations non négligeables de l'échangeur thermique.

Pour prendre en compte la dilatation de l'échangeur thermique, le carter de l'échangeur thermique peut être attaché à la tuyère d'échappement par un soufflet. Néanmoins, les conditions d'utilisation peuvent rendre délicat le dimensionnement d'un tel soufflet, en raison notamment de la pression et de la température subies et des dilatations importantes en particulier de l'échangeur thermique.

Les documents JP 2003 227312 A, US 4 090 358, FR 3 142 221 A1 et US 2015/284074 A1 sont aussi connus.

La présente invention a alors pour objet de proposer un dispositif innovant permettant de lier un échangeur thermique à une tuyère d'échappement.

Ainsi, l'invention propose un ensemble d'échange thermique comprenant une tuyère d'échappement alimentant en gaz chauds un échangeur thermique, la tuyère d'échappement s'étendant jusqu'à un tronçon extrémal de sortie délimitant un premier volume par lequel lesdits gaz chauds s'échappent pour rejoindre l'échangeur thermique, l'échangeur thermique comprenant un tronçon extrémal d'entrée délimitant un deuxième volume par lequel les gaz chauds pénètrent dans l'échangeur thermique, le tronçon extrémal de sortie et le tronçon extrémal d'entrée s'étendant à 360 degrés autour d'un axe longitudinal.

En outre, le tronçon extrémal de sortie rentre dans le tronçon extrémal d'entrée afin de former une chicane au regard des gaz chauds, un espace séparant radialement le tronçon extrémal de sortie et le tronçon extrémal d'entrée, ledit ensemble d'échange thermique comportant une bande de recouvrement multicouche solidarisée à une première cornière qui est solidaire de la tuyère d'échappement, la bande de recouvrement multicouche étant solidarisée à une deuxième cornière qui est solidaire de l'échangeur thermique, la bande de recouvrement multicouche entourant le tronçon extrémal d'entrée et le tronçon extrémal de sortie.

Dès lors, l'insertion de la tuyère d'échappement dans l'échangeur thermique tend de fait à limiter la circulation des gaz chauds d'échappement vers l'extérieur par un effet de chicane.

En outre, cette caractéristique permet d'obtenir un chemisage qui réduit les zones de séparation du fluide et par suite les pertes par frottement.

La chicane a ainsi une incidence limitée sur l'écoulement des gaz chauds de la tuyère d'échappement vers l'échangeur thermique puisque cette tuyère d'échappement pénètre dans l'échangeur thermique.

En outre, ces caractéristiques permettent de conserver un conduit sensiblement lisse même quand l'échangeur thermique va avoir tendance à entrer, par exemple de l'ordre de 5 à 6mm, dans la tuyère d'échappement à la suite d'une dilatation selon une direction longitudinale. L'écoulement des gaz d'échappement n'est pas ou est peu perturbé à la suite de cette dilatation car la forme aérodynamique de la zone reste inchangée.

En particulier, le tronçon extrémal d'entrée peut chevaucher le tronçon extrémal de sortie sur une longueur d'au moins 10 mm, voire de 15mm. Une telle longueur peut en effet s'avérer suffisante pour compenser une dilatation engendrant une déformation de l'échangeur thermique de l'ordre de 5-6mm.

Selon un autre aspect, l'espace présent entre le tronçon extrémal d'entrée et le tronçon extrémal de sortie est défini pour éviter un contact entre ce tronçon extrémal d'entrée et ce tronçon extrémal de sortie. Cet espace peut s'étendre, radialement selon l'axe longitudinal, sur une hauteur de l'ordre de 5 mm par exemple.

En outre, cette chicane débouche sur un volume délimité longitudinalement par la première cornière et la deuxième cornière, et radialement par la bande de recouvrement multicouche. Dès lors, cet agencement permet de générer des pertes de charge limitant un écoulement vers l'extérieur. La tuyère d'échappement, l'échangeur thermique, la première cornière, la deuxième cornière et la bande de recouvrement multicouche tendent à former conjointement un dispositif de connexion sensiblement étanche aux gaz chauds circulant dans la tuyère d'échappement et dans l'échangeur thermique.

En outre, la bande de recouvrement multicouche comporte un empilement de couches. Une telle bande de recouvrement multicouche est suffisamment souple et élastique pour tolérer les déformations de la tuyère d'échappement et/ou de l'échangeur thermique en fonctionnement dans toutes les directions à savoir selon la direction longitudinale de déplacement des gaz d'échappement et selon deux directions perpendiculaires à cette direction longitudinale, voire peut aussi admettre de légères rotations par rapport à ces trois directions. La bande de recouvrement multicouche peut ainsi permettre de ne pas transmettre d'effort entre la tuyère d'échappement et l'échangeur thermique, la tuyère d'échappement et l'échangeur thermique étant fonctionnellement indépendants l'un de l'autre. Ainsi, la bande de recouvrement multicouche permet d'absorber les vibrations et les dilatations auxquelles sont soumis la tuyère d'échappement et l'échangeur thermique. En outre, une telle bande de recouvrement multicouche peut résister aux températures élevées et à la pression subies en fonctionnement.

Dès lors, la tuyère d'échappement, l'échangeur thermique, la première cornière, la deuxième cornière et la bande de recouvrement multicouche tendent à former conjointement un dispositif de connexion relativement simple, léger, résistant thermiquement et mécaniquement, et sensiblement étanche aux gaz d'échappement. De plus, la bande de recouvrement multicouche peut être aisément remplacée en cas de dégradations.

Cet ensemble d'échange thermique peut de plus comporter une ou plusieurs des caractéristiques qui suivent, prises seules ou en combinaison.

Ainsi, la première cornière peut s'étendre le long d'une première ligne fermée autour dudit axe longitudinal et la deuxième cornière s'étendant le long d'une deuxième ligne fermée autour dudit axe longitudinal.

Les cornières sont continues pour optimiser l'étanchéité.

Selon une possibilité compatible avec les précédentes, la bande de recouvrement multicouche peut être fixée au moins à la première cornière ou à la deuxième cornière par des vis.

Une solidarisation par visserie s'avère efficace pour attacher la bande de recouvrement multicouche à une cornière.

Eventuellement, au moins un collier de serrage peut serrer la bande de recouvrement multicouche au moins à une cornière de fixation parmi la première cornière et la deuxième cornière.

Cette caractéristique présente l'avantage non négligeable de ne pas nécessiter de percer la cornière concernée pour fixer la bande de recouvrement multicouche.

Dans ce cas et en présence d'un tronçon extrémal correspondant polygonal, la cornière de fixation peut s'étendre selon une direction radiale d'une face interne à une face externe, la face interne décrivant un polygone et étant accolée à la tuyère d'échappement ou à l'échangeur thermique, la face externe étant courbée et accolée au collier de serrage.

Selon une possibilité compatible avec les précédentes, la bande de recouvrement multicouche est enroulée sur elle-même autour dudit axe longitudinal.

Autrement dit ladite bande de recouvrement multicouche s'étend à plus de 360 degrés autour dudit axe longitudinal en étant repliée sur elle-même. La bande de recouvrement peut décrire plus d'un tour autour de l'axe longitudinal. Ainsi, la bande de recouvrement multicouche recouvre totalement le volume séparant la première cornière de la deuxième cornière.

Par exemple, la bande de recouvrement multicouche comprend successivement une première zone extrémale, une zone centrale et une deuxième zone extrémale, la première zone extrémale et la zone centrale étant posées chacune sur la première cornière et la deuxième cornière, la deuxième zone extrémale recouvrant au moins la première zone extrémale

Selon une possibilité compatible avec les précédentes, la bande de recouvrement multicouche peut comporter un empilement de couches comprenant plusieurs premières couches, l'empilement reposant sur la première cornière et la deuxième cornière, chaque première couche comprenant de la silice, ledit empilement comprenant une deuxième couche au moins partiellement métallique.

Les premières couches à base de silice permettent notamment d'optimiser la résistance thermique de la bande de recouvrement multicouche. Ces premières couches à base de silice peuvent comprendre des tissus ayant des fibres minérales en silice.

De plus, le nombre de premières couches peut être déterminé pour obtenir le niveau d'étanchéité souhaité. Plus il y a de premières couches, plus la bande de recouvrement est étanche.

La couche métallique permet d'obtenir la tenue mécanique requise, et peut renforcer l'étanchéité de la bande de recouvrement. La couche métallique est favorablement très fine, en ayant par exemple une épaisseur comprise entre 10 microns et 30 microns. Une telle épaisseur permet de conférer une souplesse suffisante à la bande de recouvrement pour tolérer notamment les déformations de l'échangeur thermique en fonctionnement.

Dès lors, la bande de recouvrement peut être résistante, élastique et peut être relativement souple et légère.

Eventuellement, la deuxième couche est disposée entre deux premières couches.

Par exemple, la deuxième couche représente l'avant dernière couche de l'empilement de la bande de recouvrement, une seule première couche séparant la deuxième couche d'un milieu extérieur.

La deuxième couche est très fine et collée sur des couches de silice. La deuxième couche peut alors être placée au sein de l'empilement de la bande de recouvrement, par exemple en avant dernière position. Un tel agencement permet d'éviter que la deuxième couche soit déchirée lors de pose de la bande de recouvrement par un opérateur ou encore en fonctionnement par exemple. De plus, la deuxième couche prisonnière dans l'empilement de la bande de recouvrement peut subir plus de déformations sans se déchirer, par élimination d'un effet de peau qui génère plus de cisaillement dans la peau externe.

Eventuellement, la deuxième couche peut comporter un treillis métallique ou une feuille métallique, la deuxième couche étant en alliage d'aluminium ou en acier inoxydable.

En particulier, la deuxième couche peut comprendre un treillis en acier inoxydable ou une feuille en alliage d'aluminium. Une feuille métallique présente l'avantage de renforcer l'étanchéité de la bande de recouvrement.

Selon une possibilité compatible avec les précédentes, chaque première couche peut avoir une épaisseur de l'ordre de 0.3 mm, et la deuxième couche peut avoir une épaisseur de l'ordre de 0.02 mm.

Selon une possibilité compatible avec les précédentes l'empilement de la bande de recouvrement peut comporter au moins une dizaine de premières couches.

Selon une possibilité compatible avec les précédentes, le tronçon extrémal de sortie et le tronçon extrémal d'entrée peuvent avoir chacun une forme polygonale.

Par exemple, le tronçon extrémal de sortie et le tronçon extrémal d'entrée sont homothétiques en étant de même forme mais de dimensions différentes.

Selon une possibilité compatible avec les précédentes, ledit ensemble d'échange thermique peut comporter au moins un boudin d'étanchéité agencé longitudinalement entre la première cornière et la deuxième cornière, ledit au moins un boudin d'étanchéité étant agencé radialement par rapport à l'axe longitudinal dans un volume compris entre le tronçon extrémal d'entrée et la bande de recouvrement multicouche.

Le ou les boudins optionnels peuvent notamment limiter les risques de fuite des gaz chauds vers l'extérieur.

Eventuellement le tronçon extrémal de sortie et le tronçon extrémal d'entrée pouvant chacun être de forme polygonale et avoir un même nombre de côtés, ledit ensemble d'échange thermique peut comporter au moins un boudin d'étanchéité par côté du tronçon extrémal d'entrée, au moins un boudin d'étanchéité étant agencé entre chaque côté du tronçon extrémal d'entrée et la bande de recouvrement multicouche.

Par exemple, la tuyère d'échappement comporte quatre côtés en regard de quatre côtés de l'échangeur thermique. Entre chaque côté de l'échangeur thermique et la bande de recouvrement multicouche, ce système peut comprendre au moins un boudin en fonction du volume disponible et de l'épaisseur du boudin.

Selon une possibilité compatible avec les précédentes, chaque boudin d'étanchéité peut comprendre un empilement comportant des couches isolantes comprenant de la silice, au moins un boudin d'étanchéité ayant un empilement comportant des couches isolantes recouvrant une couche intérieure comportant de la vermiculite en regard du tronçon extrémal d'entrée.

Chaque boudin peut comprendre les mêmes types de tissus que la bande de recouvrement multicouche, voire une couche de vermiculite et/ou une couche métallique disposée dans l'empilement de couches isolantes. Cette couche de vermiculite confère une protection thermique au boudin.

En présence de plusieurs boudins disposés les uns sur les autres, il est possible de ne disposer la couche de vermiculite que sur le boudin le plus proche du tronçon extrémal d'entrée, le ou les autres boudins n'ayant que l'empilement de couches isolantes par exemple.

Selon une possibilité compatible avec les précédentes, ledit échangeur thermique peut comporter un carter logeant une unité d'échange thermique à plaques, le carter comportant ledit tronçon extrémal d'entrée.

Selon un autre aspect, une installation motrice, comprenant un moteur muni d'un compresseur et d'une chambre de combustion, comporte un ensemble d'échange thermique selon l'invention du type décrit précédemment, la tuyère d'échappement étant en communication fluidique avec le moteur et recevant des gaz chauds émis par ladite chambre de combustion, ledit échangeur thermique étant en communication fluidique avec le compresseur pour recevoir un air comprimé et le réchauffer avec lesdits gaz chauds avant de les renvoyer vers ladite chambre de combustion.

L'invention vise de plus un aéronef comportant une telle installation motrice.

L'invention et ses avantages apparaîtront avec plus de détails dans le cadre de la description qui suit avec des exemples donnés à titre illustratif en référence aux figures annexées qui représentent :
la figure 1, une vue schématique d'un aéronef muni d'une installation motrice selon l'invention,
la figure 2, une vue de côté d'une installation motrice selon l'invention,
la figure 3, une vue en coupe longitudinale d'un ensemble d'échange thermique selon l'invention,
la figure 4, une vue partielle en coupe de la bande de recouvrement multicouche de la figure 3,
la figure 5, un schéma illustrant une fixation par collier de serrage d'une bande de recouvrement multicouche,
la figure 6, un schéma illustrant une cornière bombée,
la figure 7, un schéma illustrant les couches d'une bande de recouvrement multicouche,
la figure 8, un schéma illustrant les couches d'une bande de recouvrement multicouche,
la figure 9, une vue en coupe radiale d'un ensemble d'échange thermique selon l'invention, et
la figure 10, un schéma illustrant les couches d'un boudin.

Les éléments présents dans plusieurs figures distinctes sont affectés d'une seule et même référence.

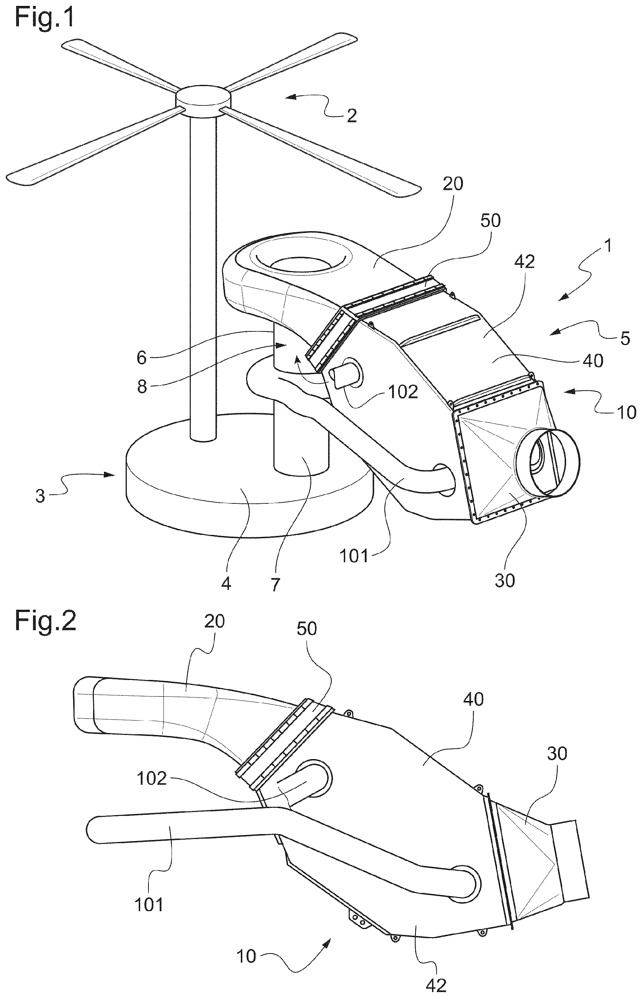

La figure 1 présente un ensemble d'échange thermique 10 agencé au sein d'une installation motrice 5, et en particulier pour motoriser un aéronef 1.

Selon l'exemple illustré, le moteur 6 peut mettre en mouvement au moins un rotor 2 via une chaîne de transmission de puissance. Par exemple, le moteur 6 comporte un arbre de puissance mettant en mouvement une boîte de transmission de puissance 4 de la chaîne de transmission de puissance, cette boîte de transmission de puissance mettant en rotation le rotor 2.

Le moteur 6 peut être un turbomoteur comprenant un compresseur 7 pour acheminer de l'air comprimé vers une chambre de combustion 8. Les gaz d'échappement chauds générés par la chambre de combustion 8 sont dits plus simplement « gaz chaud ». Ces gaz chauds traversent alors au moins une turbine de détente haute pression solidaire du compresseur 7, voire une turbine de détente basse pression mettant en mouvement l'arbre de puissance selon l'exemple illustré, puis s'échappent du moteur 6.

Pour améliorer le rendement du moteur 6, l'installation motrice 5 peut donc comprendre un ensemble d'échange thermique 10 selon l'invention comprenant une tuyère d'échappement 20 et un échangeur thermique 40 situé en aval de la tuyère d'échappement 20 selon le sens de circulation des gaz chauds.

Dès lors, la tuyère d'échappement 20 est connectée au moteur 6 afin de recevoir les gaz chauds sortant du moteur 6. De plus, l'échangeur thermique 40 est en communication fluidique avec le compresseur 7 via au moins une conduite d'entrée 101 et une conduite de sortie 102 illustrée schématiquement. L'air comprimé est acheminé par une conduite d'entrée 101 dans l'échangeur thermique 40, puis est réchauffé par les gaz chauds avant d'être dirigé vers la chambre de combustion 8 par au moins une conduite de sortie 102.

En référence à la figure 2, l'échangeur thermique 40 peut en outre être connecté à une tuyère de sortie 30 pour évacuer les gaz chauds.

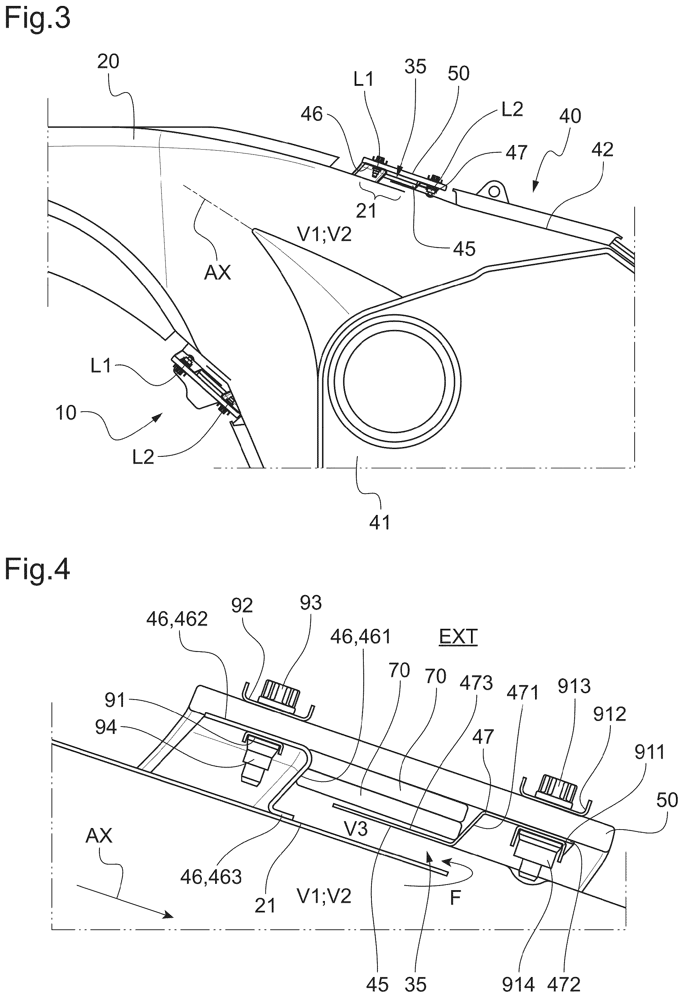

Plus précisément et en référence à la figure 3, la tuyère d'échappement 20 s'étend, du moteur 6 vers l'échangeur thermique 40, jusqu'à un tronçon extrémal de sortie 21 délimitant un premier volume V1 par lequel les gaz chauds s'échappent pour rejoindre l'échangeur thermique 40.

De même, l'échangeur thermique 40 comprend un tronçon extrémal d'entrée 45 délimitant un deuxième volume V2 par lequel les gaz chauds pénètrent dans l'échangeur thermique 40.

Le tronçon extrémal de sortie 21 et le tronçon extrémal d'entrée 45 ont une forme circulaire ou polygonale selon l'exemple illustré, en s'étendant chacun à 360 degrés autour d'un axe longitudinal AX.

Par exemple, l'échangeur thermique 40 comporte un carter 42 logeant une unité d'échange thermique 41 à plaques. Cette unité d'échange thermique 41 à plaques comporte des modules creux en communication fluidique via les conduites d'entrée 101 et de sortie 102 respectivement avec le compresseur 7 et la chambre de combustion 8 du moteur 6, les gaz chauds passant entre les modules par exemple à contre-courant par rapport à l'air comprimé.

Ainsi, le carter 42 peut comporter le tronçon extrémal d'entrée 45 précité.

En référence à la vue agrandie de la figure 4, le tronçon extrémal de sortie 21 rentre dans le tronçon extrémal d'entrée 45 afin de former une chicane 35 au regard des gaz chauds provenant de la tuyère d'échappement 20. Le tronçon extrémal d'entrée 45 est ainsi agencé en recouvrement de la périphérie du tronçon extrémal de sortie 21. En outre, un espace V3 sépare radialement, au regard de l'axe longitudinal AX, le tronçon extrémal de sortie 21 et le tronçon extrémal d'entrée 45. Le premier volume V1 est ainsi au moins partiellement inscrit dans le deuxième volume V2.

Pour sortir de l'ensemble d'échange thermique 10 entre la tuyère d'échappement 20 et l'échangeur thermique 40, les gaz chauds doivent alors effectuer un virage à 180 degrés conformément à la flèche F pour pénétrer dans l'espace V3, et un autre virage pour en sortir. La chicane 35 tend à donc à limiter les risques de fuite vers l'extérieur EXT.

Pour connecter la tuyère d'échappement 20 et l'échangeur thermique 40 en réduisant les risques de fuite de gaz chauds tout en tolérant des déformations de la tuyère d'échappement 20 et de l'échangeur thermique 40, l'ensemble d'échange thermique 10 comporte une bande de recouvrement multicouche 50 qui recouvre toute la périphérie de la chicane 35.

La bande de recouvrement multicouche 50 est solidarisée à la tuyère d'échappement 20 par une première cornière 46. Par exemple, la première cornière 46 comporte une première paroi centrale 461 solidaire d'une première paroi externe 462 solidarisée à la bande de recouvrement multicouche 50, la première paroi centrale 461 pouvant être brasée à la tuyère d'échappement 20 directement ou via une première paroi interne 463. Par ailleurs, la première cornière 46 peut s'étendre le long d'une première ligne L1 fermée autour de l'axe longitudinal AX.

De même, la bande de recouvrement multicouche 50 est solidarisée à l'échangeur thermique 40, et selon l'exemple au carter 42, par une deuxième cornière 47. Par exemple, la deuxième cornière 47 comporte une deuxième paroi centrale 471 solidaire d'une deuxième paroi externe 472 solidarisée à la bande de recouvrement multicouche 50, la deuxième paroi centrale 471 pouvant être brasée à l'échangeur thermique 40 directement ou via une deuxième paroi interne 473. Par ailleurs, la deuxième cornière 47 peut s'étendre le long d'une deuxième ligne fermée L2 autour dudit axe longitudinal AX.

La première cornière 46 et la deuxième cornière 47 sont longitudinalement de part et d'autre de la chicane 35. Cette chicane 35 peut notamment être délimitée par les première et deuxième parois centrales 461, 471.

Selon l'exemple de la figure 4, la bande de recouvrement multicouche 50 est fixée à la première cornière 46 et/ou à la deuxième cornière 47 via un dispositif de vissage. Un tel dispositif de vissage peut comprendre une contre-plaque interne 91, 911 accolée à la cornière 46,47 concernée et une contre-plaque externe 92, 912 accolée à la bande de recouvrement multicouche 50, des vis 93, 913 traversant la contre-plaque externe 92, 912, puis la bande de recouvrement multicouche 50, puis la cornière 46,47 concernée, puis la contre-plaque interne 91, 911 concernée pour être vissées à des écrous 94, 914.

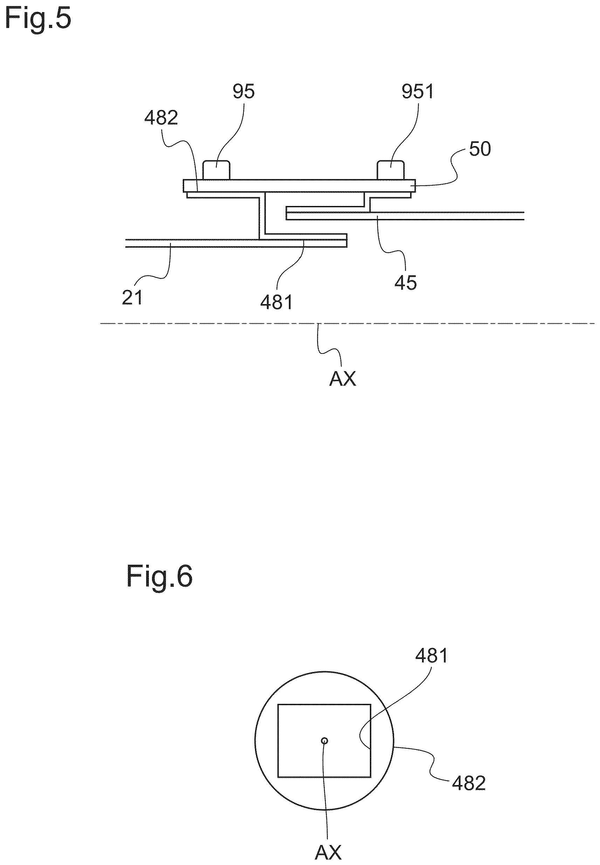

Selon l'exemple de la figure 5, la bande de recouvrement multicouche 50 est fixée à la première cornière 46 et/ou à la deuxième cornière 47 avec un collier de serrage 95, 951.

En référence à la figure 6, la cornière de fixation 46 ou 47 s'étend selon une épaisseur d'une face interne 481 à une face externe 482. Notamment en présence d'une tuyère d'échappement 20 ou d'un tronçon extrémal d'entrée 45 ou de sortie 21 polygonal, la face interne 481 peut décrire un polygone et étant accolée à la tuyère d'échappement 20 ou à l'échangeur thermique 40, la face externe 482 étant courbée, à savoir sensiblement circulaire, pour coopérer avec un collier de serrage 95,951.

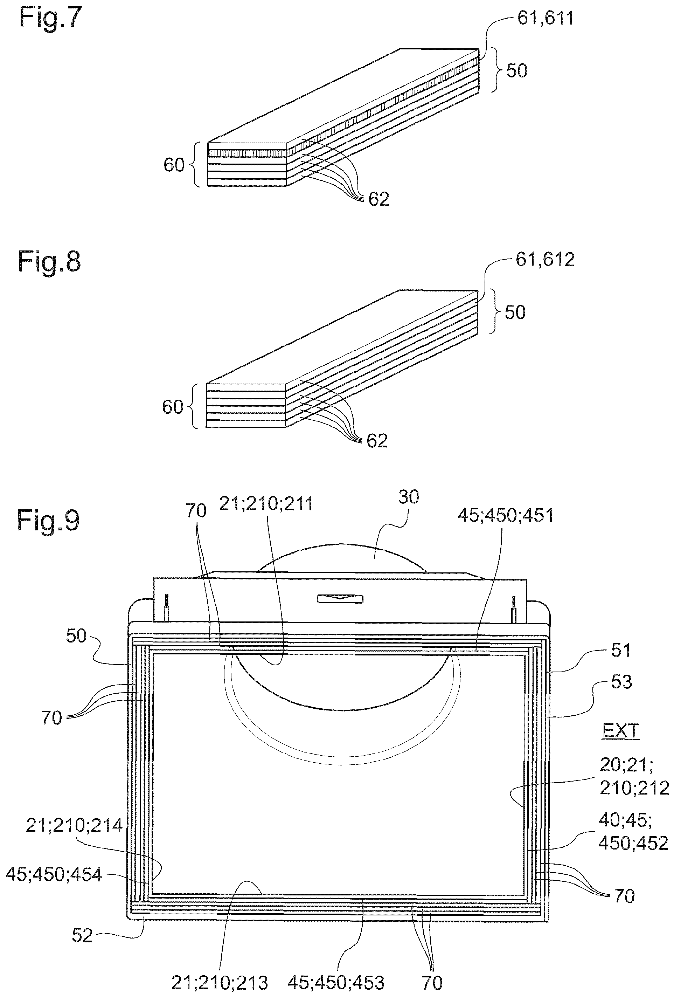

Par ailleurs et en référence à la figure 7 et la figure 8, la bande de recouvrement multicouche 50 peut comporter un empilement 60 de couches. Cet empilement 60 comporte plusieurs premières couches 62 et une deuxième couche 61. L'empilement 60 repose alors sur la première cornière 46 et la deuxième cornière 47.

Selon une possibilité, chaque première couche 62 comprend de la silice, et par exemple un tissu comprenant des fibres à base de silice, telles que du basalte ou du quartz.

En revanche, la deuxième couche 61 est au moins partiellement métallique. La deuxième couche 61 comporte un treillis métallique 611 selon l'exemple de la figure 7 ou une feuille métallique 612 selon l'exemple de la figure 8, la deuxième couche 61 étant en alliage d'aluminium ou en acier inoxydable.

La deuxième couche 61 peut recouvrir les première couches en représentant la dernière couche de l'empilement 60 de la bande de recouvrement. Alternativement et selon les exemples illustrés, la deuxième couche 61 peut être encapsulée dans l'empilement 60 de la bande de recouvrement en étant agencée entre deux premières couches 62, voire même peut être agencée en avant-dernière position dans l'empilement.

En référence à la figure 9, la bande de recouvrement multicouche 50 est possiblement enroulée partiellement sur elle-même autour de l'axe longitudinal AX. Ainsi, la bande de recouvrement multicouche 50 peut s'étendre selon sa plus grande dimension, à savoir sa longueur, en comprenant successivement une première zone extrémale 51, une zone centrale 52 et une deuxième zone extrémale 53, la première zone extrémale 51 et la zone centrale 52 étant chacune accolées à la première cornière 46 et à la deuxième cornière 47, la deuxième zone extrémale 53 reposant sur la première zone extrémale 51.

Selon un autre aspect, l'ensemble d'échange thermique 10 peut comporter au moins un boudin d'étanchéité 70. Chaque boudin d'étanchéité 70 peut être agencé longitudinalement entre la première cornière 46 et la deuxième cornière 47, et en particulier entre la première paroi centrale 461 et la deuxième paroi centrale 471 comme illustré sur la figure 4. De plus, chaque boudin d'étanchéité 70 peut être agencé radialement par rapport à l'axe longitudinal AX dans un volume compris entre le tronçon extrémal d'entrée 45 et la bande de recouvrement multicouche 50.

Chaque boudin d'étanchéité 70 vise notamment à limiter les risques de fuite des gaz chauds vers l'extérieur EXT.

En présence de tronçons 21,45 polygonaux comme illustrés sur la figure 9, le tronçon extrémal de sortie 21 et le tronçon extrémal d'entrée 45 peuvent avoir chacun un même nombre de côtés 210, 450 et quatre côtés selon l'exemple donné.

Dès lors, l'ensemble d'échange thermique 10 comporte au moins un boudin d'étanchéité 70 par côté 210 du tronçon extrémal d'entrée 45, au moins un boudin d'étanchéité 70 étant agencé entre chaque côté 210 du tronçon extrémal d'entrée 45 et la bande recouvrement multicouche 50. Ainsi, selon l'exemple deux boudins d'étanchéité 70 sont agencés entre le côté 451 et la bande recouvrement multicouche 50, trois boudins d'étanchéité 70 sont agencés entre le côté 452 et la bande recouvrement multicouche 50, trois boudins d'étanchéité 70 sont agencés entre le côté 453 et la bande recouvrement multicouche 50, et trois boudins d'étanchéité 70 sont agencés entre le côté 454 et la bande recouvrement multicouche 50.

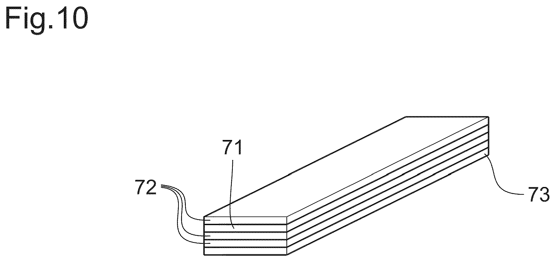

En référence à la figure 10, chaque boudin d'étanchéité 70 comprend un empilement comportant des couches isolantes 72 comprenant de la silice, cet empilement pouvant comprendre une couche additionnelle 71 au moins partiellement métallique. Eventuellement, au moins un boudin d'étanchéité 70 a un tel empilement comportant des couches isolantes 72 recouvrant une couche intérieure 73 comportant de la vermiculite en regard, voire en contact du tronçon extrémal d'entrée 45.

Chaque couche isolante 72 peut comprendre un tissu comprenant de la silice, à l'instar de la bande de recouvrement 50. De même, la couche additionnelle éventuelle peut comprendre un treillis ou une feuille métallique.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. **Il** est bien sûr envisageable de remplacer un moyen décrit par un moyen équivalent sans sortir du cadre de la présente invention défini par les revendications.

## Revendications

1. Ensemble d'échange thermique (10) comprenant une tuyère d'échappement (20) alimentant en gaz chauds un échangeur thermique (40), la tuyère d'échappement (20) s'étendant jusqu'à un tronçon extrémal de sortie (21) délimitant un premier volume (V1) par lequel lesdits gaz chauds s'échappent pour rejoindre l'échangeur thermique (40), l'échangeur thermique (40) comprenant un tronçon extrémal d'entrée (45) délimitant un deuxième volume (V2) par lequel les gaz chauds pénètrent dans l'échangeur thermique (40), le tronçon extrémal de sortie (21) et le tronçon extrémal d'entrée (45) s'étendant à 360 degrés autour d'un axe longitudinal (AX);
**caractérisé en ce que** le tronçon extrémal de sortie (21) rentre dans le tronçon extrémal d'entrée (45) afin de former une chicane (35) au regard desdits gaz chauds; un espace (V3) séparant radialement le tronçon extrémal de sortie (21) et le tronçon extrémal d'entrée (45), ledit ensemble d'échange thermique (10) comportant une bande de recouvrement multicouche (50) solidarisée à une première cornière (46) qui est solidaire de la tuyère d'échappement (20), la bande de recouvrement multicouche (50) étant solidarisée à une deuxième cornière (47) qui est solidaire de l'échangeur thermique (40), la bande de recouvrement multicouche (50) entourant le tronçon extrémal d'entrée (45) et le tronçon extrémal de sortie (21).

2. Ensemble d'échange thermique selon la revendication 1,
dans lequel la bande de recouvrement multicouche (50) est fixée au moins à la première cornière (46) ou à la deuxième cornière (47) par des vis.

3. Ensemble d'échange thermique selon l'une quelconque des revendications 1 à 2,
dans lequel au moins un collier de serrage (95, 951) serre la bande de recouvrement multicouche (50) au moins à une cornière de fixation parmi la première cornière (46) et la deuxième cornière (47).

4. Ensemble d'échange thermique selon la revendication 3,
dans lequel la cornière de fixation s'étend selon une direction radiale d'une face interne (481) à une face externe (482), la face interne décrivant un polygone et étant accolée à la tuyère d'échappement (20) ou à l'échangeur thermique (40), la face externe (482) étant courbée et accolée au collier de serrage (95, 951).

5. Ensemble d'échange thermique selon l'une quelconque des revendications 1 à 4,
dans lequel, la bande de recouvrement multicouche (50) est enroulée sur elle-même autour dudit axe longitudinal (AX).

6. Ensemble d'échange thermique selon l'une quelconque des revendications 1 à 5,
dans lequel la bande de recouvrement multicouche (50) comporte un empilement (60) de couches comprenant plusieurs premières couches (62), l'empilement (60) reposant sur la première cornière (46) et la deuxième cornière (47), chaque première couche (62) comprenant de la silice, ledit empilement comprenant une deuxième couche (61) au moins partiellement métallique.

7. Ensemble d'échange thermique selon la revendication 6,
dans lequel la deuxième couche (61) comporte un treillis métallique (611) ou une feuille métallique (612), la deuxième couche étant en alliage d'aluminium ou en acier inoxydable.

8. Ensemble d'échange thermique selon l'une quelconque des revendications 6 à 7,
dans lequel la deuxième couche (61) est disposée entre deux premières couches (62).

9. Ensemble d'échange thermique selon l'une quelconque des revendications 1 à 8,
dans lequel la première cornière (46) s'étend le long d'une première ligne (L1) fermée autour dudit axe longitudinal (AX) et la deuxième cornière s'étendant le long d'une deuxième ligne fermée (L2) autour dudit axe longitudinal (AX).

10. Ensemble d'échange thermique selon l'une quelconque des revendications 1 à 9,
dans lequel le tronçon extrémal de sortie (21) et le tronçon extrémal d'entrée (45) ont chacun une forme polygonale.

11. Ensemble d'échange thermique selon l'une quelconque des revendications 1 à 10,
dans lequel ledit ensemble d'échange thermique (10) comporte au moins un boudin d'étanchéité (70) agencé longitudinalement entre la première cornière (46) et la deuxième cornière (47), ledit au moins un boudin d'étanchéité (70) étant agencé radialement par rapport à l'axe longitudinal (AX) dans un volume compris entre le tronçon extrémal d'entrée (45) et la bande de recouvrement multicouche (50).

12. Ensemble d'échange thermique selon la revendication 10 et la revendication 11,
dans lequel le tronçon extrémal de sortie (21) et le tronçon extrémal d'entrée (45) ayant chacun un même nombre de côtés (210, 450), ledit ensemble d'échange thermique (10) comporte au moins un boudin d'étanchéité (70) par côté (210) du tronçon extrémal d'entrée (45), au moins un boudin d'étanchéité (70) étant agencé entre chaque côté (210) du tronçon extrémal d'entrée (45) et la bande de recouvrement multicouche.

13. Ensemble d'échange thermique selon l'une quelconque des revendications 11 à 12,
dans lequel chaque boudin d'étanchéité (70) comprend un empilement comportant des couches isolantes (72) comprenant de la silice, au moins un boudin d'étanchéité (70) ayant un empilement comportant des couches isolantes (72) recouvrant une couche intérieure (73) comportant de la vermiculite en regard du tronçon extrémal d'entrée.

14. Ensemble d'échange thermique selon l'une quelconque des revendications 1 à 13,
dans lequel ledit échangeur thermique (40) comporte un carter (42) logeant une unité d'échange thermique (41) à plaques, le carter (42) comportant ledit tronçon extrémal d'entrée (45).

15. Installation motrice (5) comprenant un moteur (6) muni d'un compresseur (7) et d'une chambre de combustion (8),
**caractérisée en ce que** ladite installation motrice (5) comporte un ensemble d'échange thermique (10) selon l'une quelconque des revendications 1 à 14, la tuyère d'échappement (20) étant en communication fluidique avec le moteur (6) et recevant des gaz chauds émis par ladite chambre de combustion (8), ledit échangeur thermique (40) étant en communication fluidique avec le compresseur (7) pour recevoir un air comprimé et le réchauffer avec lesdits gaz chauds avant de les renvoyer vers ladite chambre de combustion (8).

16. Aéronef (1),
**caractérisé en ce que** ledit aéronef (1) comporte une installation motrice (5) selon la revendication 15.
